# EUROPEAN PATENT SPECIFICATION

(11) **EP 3 629 497 B1**
(45) Date of publication and mention of the grant of the patent: **15.06.2022**
(21) Application number: 18196845.4
(22) Date of filing: 26.09.2018
(51) Int. Cl.: H04B 17/00, H04B 17/18, H04B 17/309, H04L 1/24, H04W 24/08

(54) **TEST APPARATUS AND TEST METHOD FOR TESTING A WIRELESS CONNECTION USING FREQUENCY HOPPING**
TESTVORRICHTUNG UND TESTVERFAHREN ZUM TESTEN EINER DRAHTLOSEN FREQUENZSPRUNGSVERBINDUNG
APPAREIL ET PROCÉDÉ DE TEST POUR TESTER UNE CONNEXION SANS FIL UTILISANT LE SAUT DE FRÉQUENCE

(43) Date of publication of application: 01.04.2020
(73) Proprietor: Rohde & Schwarz GmbH & Co. KG, 81671 München (DE)
(72) Inventor: REHM, Norbert, 89365 Röfingen (DE)
(74) Representative: Isarpatent

(56) References cited:
- WO-A2-2005/109731
- US-A1- 2015 063 133

## Description

### FIELD OF THE INVENTION

The present invention relates to a test apparatus and a test method for testing a wireless connection between a transmitting device and a receiving device. The present invention further relates to a test arrangement, in particular a test arrangement for testing a wireless connection between a transmitting device and a receiving device.

### BACKGROUND

WO 2005/109731 A2 describes an embedded method for analyzing RF channel communication link parameters. The method includes inserting data having a predetermined pattern to a transmission at a transmitter, processing the data through a waveform processor, transmitting the data across a communications link at traffic rates, receiving the transmitted data at a receiver, and determining a RF channel bit error rate of the transmitted data at the receiver. The transmitted data can include embedded synchronization and operating mode patterns such that the receiver can distinguish the transmitted data from contemporaneous voice or other data transmissions.

US 2015/063133 A1 describes a method of using tester data packet signals and control instructions for testing multiple data packet signal transceiver devices under test (DUTs). During mutually alternating time intervals, multiple tester data packet signals and DUT control instructions are used for concurrent testing of multiple DUTs.

Although applicable in principle to any wireless test system, the present invention and its underlying problem will be hereinafter described in combination with testing a transmission path applying frequency hopping.

When transmitting data through a wireless communication link, the data which are to be transmitted may be modulated on a carrier signal of a specific frequency. Accordingly, a receiver may receive the wireless signal of the specific carrier frequency and demodulate the received signal in order to obtain the data included in the wireless signal. In order to assess a quality of a wireless communication link, a test system may provide a predetermined data signal to a transmitter which transmits the data by a wireless communication link, and the data may be compared with corresponding data from a receiver which receives the wireless signal emitted by the transmitter. Accordingly, by comparing the data, it is possible to determine a measure, such as a bit error rate (BER) or the like.

It is clear from the previous explanations that the transmitter and the receiver always have to be tuned to the same frequency.

In some applications, the carrier frequency of a wireless communication link may change over time. For example, a frequency hopping may be applied in which the transmitter and the receiver periodically change the frequency of the carrier signal. Thus, in the event when the frequency is changed, there may be a small time period in which the receiver is not exactly tuned to the transmission frequency of the transmitter. In this time period, it is not possible to perform a reliable transmission of data from the transmitter to the receiver, and consequently, an error rate may increase.

### SUMMARY

Against this background, there is the need to provide a versatile test of a wireless transmission link, in particular of a wireless transmission link applying frequency hopping.

The present invention solves this object by a test apparatus, a test arrangement and/or a test method having the features of the independent claims.

According to a first aspect, a test apparatus is provided. The test apparatus may be applicable for testing a wireless connection between a transmitting device and a receiving device. The test apparatus is defined according to claim 1. According to a second aspect, a test arrangement is provided. The test arrangement comprises a transmitting device, a receiving device and a test apparatus according to the first aspect.

According to a third aspect, a test method is provided. The test method may be applicable for testing a wireless connection between a transmitting device and a receiving device. The test method is defined according to claim 13.

The present invention is based on the fact that a change in the properties of a wireless communication link between a transmitting device and a receiving device may cause events during which it is not possible to properly receive the data included in the wireless communication signal. Such events may be, for example, a frequency hop, i.e. a change of a carrier frequency of the wireless communication link. Even if such a frequency hop is indicated from the transmitting device to the receiving device, there may be a short time period in which the receiving device cannot properly receive the wireless signal emitted by the transmitting device. This short time period may be caused, for example, due to time delays in the propagation of the signaling of a frequency hop or the like. Thus, when testing a wireless communication link applying frequency hopping or the like, a measure of quality such as a bit error rate may be low due to such synchronization effects.

The present invention therefore takes into account these facts and aims to provide a testing of a wireless communication link in which such effects due to frequency hopping or the like can be taken into account when evaluating the wireless communication link. In particular, the present invention aims to blank out the events of frequency hopping when assessing a quality of a wireless communication link.

It is for this purpose that the respective sequences in the test data are "marked" by a specific data pattern. Thus, sequences in the test data with such a specific data pattern are skipped when computing a measure of quality such as an error rate. In this way, the measure of quality (e.g. a bit error rate, BER) may be computed which is not influenced by a loss of data during the frequency hops.

In order to evaluate the measure of quality, the test apparatus may generate any kind of appropriate test data sequence. For example, the test data sequence may comprise random data, data having a predetermined pattern or any other appropriate test data sequence. For example, the test data sequence may be provided based on a test data sequence which has been generated in advance and which is stored in a memory of the test apparatus. However, any other scheme for generating the test data may be also possible.

Upon receiving a trigger signal from the transmitting device, which indicates that a change in the wireless communication link is to be applied, a specific test data pattern may be included in the test data sequence. This specific test data pattern is transmitted through the wireless communication link while the change of the transmission parameters is applied. Accordingly, the specific test data pattern included in the generated test data sequence may be considered as a marker indicating the change in the wireless communication link. Thus, when the specific test data pattern or at least a part of the specific test data pattern is identified in the test data sequence, this may be used as a signaling that the respective part of the test data sequence should not be taken into account when evaluating a measure of quality such as a BER.

In this way, a reliable measure of quality can be determined which is not influenced due to synchronization delays between a transmitting device and a receiving device during events such as frequency hopping.

Further embodiments of the present invention are subject of further subclaims and of the following description referring to the drawings.

In a possible embodiment, the received trigger signal indicates a frequency hop of the transmitting device. In particular, the trigger signal may indicate a frequency hopping of a signal of a so-called have quick (HQ) frequency hopping system.

A change of a transmission property, such as a change of the frequency may be initiated, for example by the transmitting device. By indicating this change of the transmission property to the test apparatus as a trigger signal, it is therefore possible that the test apparatus can modify the test data sequence for including the predetermined test data pattern into the test data sequence such that the transmission of the test data pattern is synchronized with the change of the transmission properties of the transmitting device. Such a change of the transmission properties may be, for example a frequency hopping, i.e. a change of the carrier frequency of the wireless communication link. Such a change of a frequency hopping is applied, for example in a frequency hopping system known as have quick (HAVE QUICK, HQ). Accordingly, with the test apparatus as described above, it is therefore now possible to evaluate the transmission properties of a HQ system without any negative influences during the frequency changes.

In a possible embodiment, a length of the predetermined test data pattern is variable. For example, the length of the predetermined test data pattern may be adapted depending on the properties of the transmission system comprising the transmitting device and the receiving device. Accordingly, an expected length of a time period for synchronizing the transmitting device and the receiving device may be taken into account by adapting the length of the predetermined test data pattern accordingly. The length of the predetermined test data pattern may be specified, for example in terms of data included in the test data pattern, or in terms of a time period. However, any other kind for adapting the length of the test data pattern may be also possible.

In a possible embodiment, the test data pattern may comprise a fixed data sequence. For example, the test data pattern may be a specific test data pattern which can be easily recognized when evaluating the received data sequence. For example, the test data pattern may comprise a specific data sequence, for example a sequence of a number of ones "1" or zeros "0" or the like.

In a possible embodiment, the analyzing device may be adapted to compute an error measure of the received data sequence with respect to the output data sequence. For this purpose, any appropriate error measure may be used for evaluating the quality of the wireless communication link between the transmitting device and the receiving device. Accordingly, the error measure may be a measure for indicating a quality of the wireless communication link.

In a possible embodiment, the error measure may be a bit error rate (BER). However, any other appropriate error measure, in particular any other appropriate measure for specifying a ratio specifying the number of errors in the data sequence may be used.

In a possible embodiment, the test apparatus may comprise a memory. The memory may be adapted to store the output test data sequence. For example, the memory may be a circular memory, a first in first out (FIFO) memory or the like. In this way, the output data sequence may be stored and provided for comparing the output data sequence with the received input data sequence provided by the receiving device. Accordingly, the analyzing device may be adapted to compare the stored output data sequence with the received input data sequence in order to evaluate the transmission properties of the wireless communication link between the transmitting device and the receiving device.

In a possible embodiment of the test arrangement, transmitting device is adapted to receive the output data sequence from the test apparatus. The transmitting device is further adapted to emit a wireless signal based on the received output data sequence. The receiving device is adapted to receive the wireless signal emitted by the transmitting device. The receiving device is further adapted to provide a data sequence based on the received wireless signal to the test apparatus. Further, the transmitting device is adapted to provide a trigger signal to the test apparatus when a predetermined event occurs. In particular, the predetermined event may be a frequency hop, such as a change of a carrier frequency of the wireless signal.

In a possible embodiment of the test arrangement, the transmitting device may be adapted to change a frequency of the emitted wireless signal. The transmitting device may be further adapted to provide the trigger signal to the test apparatus when a frequency change is performed. Accordingly, a frequency hopping such as the frequency hopping of a HQ frequency hopping system can be applied and the respective transmission properties can be evaluated.

In a possible embodiment, the transmitting device and the receiving device may be adapted to apply a have quick frequency hopping.

In a possible embodiment of the test method, the comparing the output data sequence with the input data sequence may comprise computing an error measure, in particular a bit error rate.

In a further possible embodiment of the test method, the received trigger signal may indicate a frequency hop of the transmitting device, in particular a frequency hopping signal of a have quick frequency hopping system.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a test arrangement with a test apparatus according to the present invention;
- Fig. 2: shows timing diagrams of signals used in the test arrangement according to an embodiment of the present invention; and
- Fig. 3: shows a block diagram of a test method according to the present invention.

The appended drawings are intended to provide further understanding of the embodiments of the invention. They illustrate embodiments and, in conjunction with the description, help to explain principles and concepts of the invention. Other embodiments and many of the advantages mentioned become apparent in view of the drawing. The elements in the drawings are not necessarily shown in scale.

In the drawings, similar, functionally equivalents and identical operating elements, features and components are provided with like reference signs in each case, unless stated otherwise.

### DETAILED DESCRIPTION OF THE DRAWINGS

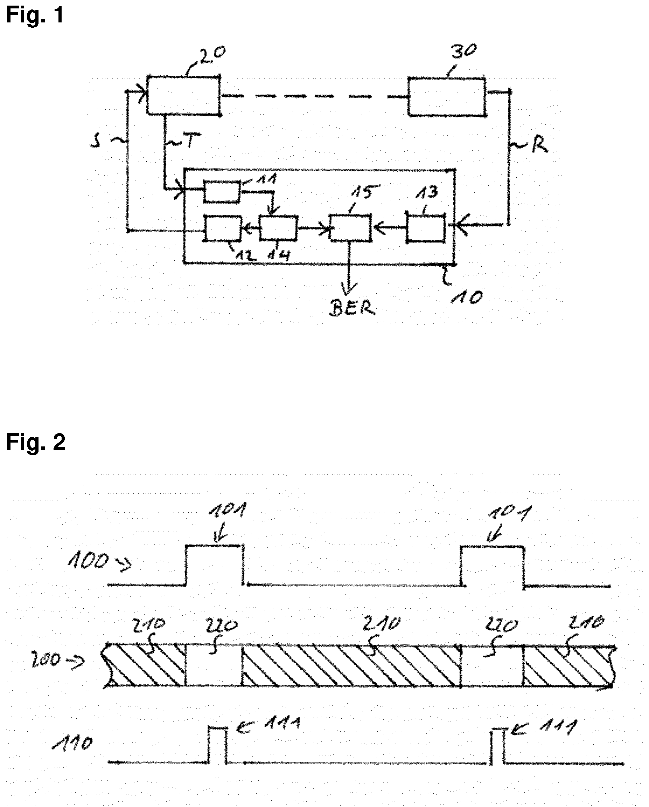

Fig. 1 shows a block diagram of a test arrangement 1. The test arrangement 1 comprises a test apparatus 10, a transmitting device 20 and a receiving device 30. The transmitting device 20 may establish a wireless communication link with the receiving device 30. For this purpose, the transmitting device 20 may emit wireless signals. The wireless signals may be received by the receiving device 30, and the receiving device 30 may decode the received wireless signal in order to extract data included in the received wireless signal. The transmitting device 20 may use a radio frequency signal with a specific frequency and emit the radio frequency signal to the receiving device 30 through the wireless communication link. In particular, the emitted radio frequency signal may comprise data which are encoded in the emitted radio frequency signal. The frequency of the radio frequency signal emitted by the transmitting device 20 and received by the receiving device 30 may change over the time. In particular, a frequency hopping may be applied for this purpose. Accordingly, the frequency of the radio frequency signal may change at specific points in time, for example, the frequency may change periodically. Each time the frequency of the radio frequency signal changes, both, the transmitting device 20 and the receiving device 30 have to be adapted to the newly used frequency. Thus, during this change of time, there may be a short time period in which the data cannot be transmitted from the transmitting device 20 to the receiving device 30 properly.

In order to test the transmission properties of the wireless communication link between the transmitting device 20 and the receiving device 30, test apparatus 10 may provide a test data sequence S to the transmitting device 20. Accordingly, transmitting device 20 may encode the data of the test data sequence S in the emitted radio frequency signal. Receiving device 30 may receive the wireless signal with the encoded data and extract the data from the received wireless signal. The extracted received data R may be provided to test apparatus 10. Test apparatus 10 may assess the quality of the wireless communication link between the transmitting device 20 and the receiving device 30 by comparing the data of the test data sequence S provided to the transmitting device 20 with the received data R extracted by receiving device 30. Test apparatus 10 may identify differences in the two data sequences and compute a measure of quality, for example an error rate such as a bit error rate (BER).

As already explained above, when the transmission properties of the transmitting device 20 change, for example when a frequency hopping is applied and consequently the carrier frequency of the wireless signal changes, there may be a short period of time during which the receiving device 30 cannot properly receive the data from the transmitting device 20. Thus, during this period of time the error rate may increase and consequently, the measure of quality decreases. In order to omit the additional errors when computing the measure of quality, the evaluation by comparing the output data sequence S with the received data sequence R is skipped during the frequency hopping.

In the following, the generation of the test data sequence and the skipping of the evaluation of the measure of quality during the change of a frequency or the like will be described in more detail.

Test apparatus 10 comprises a test signal generator 14 for generating a test data sequence. The test data sequence may be any appropriate data sequence which can be used for testing the wireless communication link between the transmitting device 20 and the receiving device 30. For example, the test data sequence may be a random data sequence. Alternatively, data sequences comprising specific data patterns for testing the wireless communication link may be used. However, it is understood that any other kind of appropriate data sequence may be generated for testing the wireless communication link. In particular, the test data sequence may be a sequence of digital data, which can be encoded in a radio frequency signal emitted by the transmitting device 20. Receiving device 30 may receive the wireless signal and extract the data.

Test apparatus 10 may further comprise a first output device 12 which is communicatively coupled with the transmitting device 20. The test data sequence generated by the test signal generator 14 may be provided to the transmitting device 20 through the first output device 12.

As already described above, transmitting device 20 may apply changes to the radio frequency signal emitted to the receiving device 30. For example, a frequency of the radio frequency signal may be changed. Each time a change in the transmission properties, for example a change in the frequency of the radio frequency signal, is desired, transmitting device 20 may provide a trigger signal T indicating such a change. The trigger signal may be received by the test apparatus 10 by a first input device 11. This trigger signal T may be forwarded from the transmitting device 20 to the first input device 11 of the test apparatus 10. Upon receiving the trigger signal T from the transmitting device 20, test apparatus 10 recognizes that a change in the transmission properties, for example a change in the frequency shall be applied. Thus, the test signal generator 14 of the test apparatus 10 includes a specific test data pattern into the generated test data sequence. This specific test data pattern is to be transmitted from the transmitting device 20 to the receiving device 30 during the period of time when the transmission properties, in particular the frequency of the radio frequency signal, is changed. Accordingly, by identifying this specific test data pattern in the test data sequence, it can be recognized that a transmission parameter, in particular a frequency of the radio frequency signal, is changed during the transmission of the respective data. Accordingly, the respective part of the test data sequence relating to the specific test data pattern is not taking into account when considering the quality of the wireless communication link between the transmitting device 20 and the receiving device 30.

For this purpose, test apparatus 10 may receive the received data sequence R from the receiving device 30 by a second input device 13. The received data sequence may be analyzed in order to evaluate the quality of the wireless communication link between the transmitting device 20 and the receiving device 30. The analysis may be performed, for example, by analyzing device 15. In particular, the received data sequence is compared with the corresponding data sequence provided to the transmitting device 20 through the first output device 12. By identifying differences between the output data sequence provided to the transmitting device 20 and the received data sequence from receiving device 30, errors can be determined and consequently an error rate, for example a bit error rate (BER) can be computed. However, it is understood that any other measure of quality, in particular any other kind of error rate can be computed, too.

As already mentioned above, the determination of the measure of quality shall not take into account the events when the transmission properties are changed, e.g. the carrier frequency is changed. For this purpose, analyzing device 15 analyzes the received data sequence from the receiving device 30 in order to identify the specific test data pattern which is included based on the reception of the trigger signal from the transmitting device 20. Since some errors may be introduced during the reception of the data by the receiving device 30 during the change of the frequency, it may be sufficient that at least some parts of the specific test data pattern may be identified by analyzing device 15.

Upon identifying the specific test data pattern in the received test data sequence, all data relating to the specific test data pattern are identified and not taking into account when evaluating the measure of quality, in particular the error rate of the wireless transmission channel between the transmitting device 20 and the receiving device 30. Consequently, the measure of quality of the wireless communication link can be computed based only on appropriate data sequences relating to a wireless transmission which is not rendered by change of a transmission property such as a change of frequency.

Fig. 2 shows a series of timing diagrams illustrating the relationship between the trigger signal, the frequency hops and the test data sequence comprising the test data pattern. Timing diagram 100 illustrates an indication of the trigger events 101 provided by the transmitting device 20. Accordingly, each time when the transmitting device 20 intends to apply a frequency change (or another change of a transmission parameter) transmitting device 20 may indicate this by a trigger event 101. Based on this trigger event, the test signal generator 14 of the test apparatus 10 includes a predetermined test data pattern 220 into the test data sequence 200. Accordingly, the test data sequence 200 comprises the original test data 210 and the predetermined test data pattern 220. Further, timing diagram 110 illustrates the frequency change (or another change of a transmission parameter). As can be seen from these timing diagrams, the frequency change 111 is performed within a time period, when the predetermined test data pattern is transmitted over the wireless communication link between the transmitting device 20 and the receiving device 30. Since the predetermined test data pattern 220 is not taking into account when assessing the quality of the wireless communication link, in particular when computing a bit error rate or the like, the quality measurement or the error measurement is not influenced by additional errors introduced due to the change of the frequency.

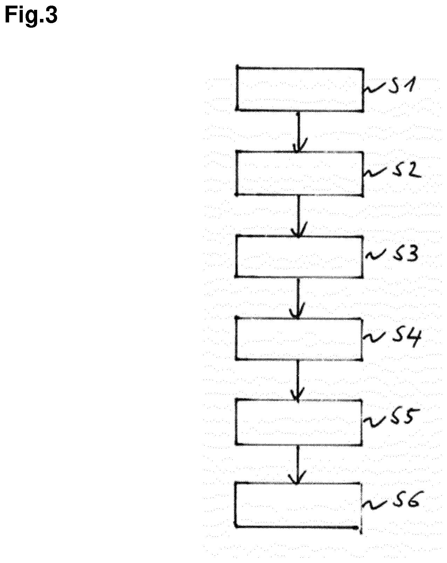

Fig. 3 shows a flowchart of a test method according to a further embodiment of the present invention. In particular, the test method may comprise any appropriate step for executing a test of a wireless communication between the transmitting device 20 and the receiving device 30 as already described above in connection with the test arrangement 1. Furthermore, any method step as described below may also be performed by the test arrangement 1, in particular the test apparatus 10 as described above.

The test method may comprise a step S1 for generating a test data sequence. In particular, the test data sequence may be generated by a test signal generator 14 of the test apparatus 10. In a step S2 a trigger signal from the transmitting device 20 may be received. In particular, the trigger signal may be received by a first input device 11 of the test apparatus 10. The method may further comprise a step S3 of including a predetermined test data pattern into the test data sequence. In particular, the test data pattern is included into the test data sequence when the trigger signal has been received. The test data pattern may be included into the test data sequence by the test signal generator 14, or another appropriate device of the test apparatus 10. In step S4 the generated test data sequence including the predetermined test data pattern are provided to the transmitting device (20) as an output data sequence. In step S5 an input data sequence may be received from the receiving device 30. The input data sequence may be received by a second input device 13 of the test apparatus 10. In step S6 the output data sequence comprising the test data sequence with the predetermined test data pattern is compared with the input data sequence. The comparison may be performed by an analyzing device 15 of the test apparatus 10. In particular, the predetermined test data pattern is skipped when comparing the output data sequence with the received input data sequence. Accordingly, the comparison of the output data sequence and the input data sequence only takes into account the data of the test data sequence without the predetermined test data patterns.

The comparing of the output data sequence with the input data sequence may compute an error measure. In particular, the comparison may comprise a computing of an error rate, for example a bit error rate.

The received trigger signal from the transmitting device 20 may indicate a frequency hop of the transmitting device 20. In particular, the trigger signal may indicate a frequency hopping signal of a have quick (HQ) frequency hopping system.

Summarizing, the present invention relates to an assessment of a wireless communication link between a transmitting device and a receiving device taking into account a change of a transmission parameter during the wireless data transmission. A trigger signal is provided indicating a change of a transmission parameter, e.g. a change of a transmission frequency. Upon receiving the trigger signal, a predetermined data pattern is included into a test data sequence which is transmitted from the transmitting device to the receiving device. Accordingly, the predetermined data pattern is transmitted when the change of the transmission parameter is applied. When assessing the quality of the wireless communication link between the transmitting device and the receiving device, the transmission of the predetermined test data pattern is not taken into account. Thus, additional errors due to the change of the transmission parameter during the transmission of the predetermined test data pattern do not influence the quality measure.

### Used reference symbols

- 1: test arrangement
- 10: test apparatus
- 11: first input device
- 12: first output device
- 13: second input device
- 14: test signal generator
- 15: analyzing device
- 20: transmitting device
- 30: receiving device
- 100: timing diagram
- 101: trigger event
- 110: timing diagram
- 111: frequency change
- 200: test data sequence
- 210: test data
- 220: test data pattern

- S1-S6: steps
- BER: bit error rate
- S: test data sequence
- R: received data
- T: trigger signal

## Claims

1. Test apparatus (10) for testing a wireless connection between a transmitting device (20) and a receiving device (30), the test apparatus (10) comprising:
a first input device (11) adapted to receive a trigger signal from the transmitting device (20), the trigger signal indicating a change in a transmission property of the transmitting device (20);
a test signal generator (14) adapted to generate a test data sequence,
wherein the test signal generator (14) is adapted to include a predetermined test data pattern into the test data sequence upon receiving the trigger signal from the transmitting device (20), and
the test signal generator (14) is adapted to provide the generated test data sequence including the predetermined test data pattern as an output data sequence;
a first output device (12) adapted to provide the output data sequence to the transmitting device (20) for emitting to the receiving device (30) a wireless signal based on the output data sequence, wherein the predetermined test data pattern is transmitted through the wireless communication link while the change of the transmission property is applied;
a second input device (13) adapted to receive an input data sequence from the receiving device (20), wherein the input data sequence is based on the wireless signal received by the receiving device (30);
an analyzing device (15) adapted to compare the output data sequence with the received input data sequence, wherein the analyzing device (15) is adapted to skip the predetermined test data pattern in the output data sequence and in the received data sequence when comparing the output data sequence with the received input data sequence.

2. Test apparatus according to claim 1, wherein the received trigger signal indicates a frequency hop of the wireless signal emitted by the transmitting device (20).

3. Test apparatus according to claim 2, wherein the received trigger signal indicates a frequency hopping signal of a have quick (HQ) frequency hopping system.

4. Test apparatus according to any of the preceding claims, wherein a length of the predetermined test data pattern is variable.

5. Test apparatus according to any of the claims 1 to 3, wherein the test data pattern comprises a fixed data sequence.

6. Test apparatus according to any of the preceding claims, wherein the analyzing device (15) is adapted to compute an error measure of the received input data sequence with respect to the output data sequence.

7. Test apparatus according to claim 6, wherein the error measure comprises a bit error rate.

8. Test apparatus according to any of the preceding claims, further comprising a memory adapted to store the output test data sequence,
wherein the analyzing device (15) is adapted to compare the stored output data sequence with the received input data sequence.

9. Test arrangement (1), the test arrangement (1) comprising:
a transmitting device (20);
a receiving device (30);
a test apparatus (10) for testing a wireless connection between the transmitting device (20) and the receiving device (30) according to any of claims 1 to 8.

10. Test arrangement according to claim 9,
wherein the transmitting device (20) adapted to receive the output data sequence from the test apparatus (10) and to emit a wireless signal based on the output data sequence;
a receiving device (30) adapted to receive the wireless signal emitted by the transmitting device (20) and to provide a received data sequence based on the received wireless signal to the test apparatus (10);
wherein the transmitting device (20) is further adapted to provide a trigger signal to the test apparatus (10) when a predetermined event occurs.

11. Test arrangement according to any of the claims 9 or 10, wherein the transmitting device (20) is adapted to change a frequency of the emitted wireless signal and to provide the trigger signal to the test apparatus (10) when a frequency change is performed.

12. Test arrangement according to any of the claims 9 to 11, wherein the transmitting device (20) and the receiving device (30) are adapted to apply a have quick, HQ, frequency hopping.

13. Test method for testing a wireless connection between a transmitting device (20) and a receiving device (30), the test method comprising:
generating (S1) a test data sequence;
receiving (S2) a trigger signal from the transmitting device (20), the trigger signal indicating a change in a transmission property of the transmitting device (20);
including (S3) a predetermined test data pattern into the test data sequence upon receiving the trigger signal from the transmitting device (20);
providing (S4) the generated test data sequence including the predetermined test data pattern, as an output data sequence, to the transmitting device (20), for emitting to the receiving device (30) a wireless signal based on the output data sequence, wherein the test data pattern is transmitted through the wireless communication link while the change of the transmission properties is applied;
receiving (S5) an input data sequence from the receiving device (30), wherein the input data sequence is based on the wireless signal received by the receiving device (30);
comparing (S6) the output data sequence with the received input data sequence, wherein the predetermined test data pattern in the output data sequence and in the received data sequence are skipped when comparing the output data sequence with the received input data sequence.

14. Test method according to claim 13, wherein comparing (S6) the output data sequence with the input data sequence further comprises computing an error measure, in particular computing a bit error rate.

15. Test method according to any of the claims 13 and 14, wherein the received trigger signal indicates a frequency hop of the wireless signal emitted by the transmitting device (20), in particular a frequency hopping signal of a have quick, HQ, frequency hopping system.

## Patentansprüche

1. Testeinrichtung (10) zum Testen einer drahtlosen Verbindung zwischen einer Übertragungsvorrichtung (20) und einer Empfangsvorrichtung (30), wobei die Testeinrichtung (10) Folgendes umfasst:
eine erste Eingabevorrichtung (11), die angepasst ist, ein Auslösesignal von der Übertragungsvorrichtung (20) zu empfangen, wobei das Auslösesignal eine Änderung einer Übertragungseigenschaft der Übertragungsvorrichtung (20) anzeigt;
einen Testsignalerzeuger (14), der angepasst ist, eine Testdatensequenz zu erzeugen,
wobei der Testsignalerzeuger (14) angepasst ist, nach Empfangen des Auslösesignals von der Übertragungsvorrichtung (20) ein vorbestimmtes Testdatenmuster in die Testdatensequenz einzubinden, und
der Testsignalerzeuger (14) ist angepasst, die erzeugte Testdatensequenz, die das vorbestimmte Testdatenmuster beinhaltet, als eine Ausgabedatensequenz bereitzustellen;
eine erste Ausgabevorrichtung (12), die angepasst ist, der Übertragungsvorrichtung (20) zum Emittieren eines drahtlosen Signals zur Empfangsvorrichtung (30) auf Basis der Ausgabedatensequenz die Ausgabedatensequenz bereitzustellen, wobei das vorbestimmte Testdatenmuster über den drahtlosen Kommunikationslink übertragen wird, während die Änderung der Übertragungseigenschaft angewendet wird;
eine zweite Eingabevorrichtung (13), die angepasst ist, eine Eingabedatensequenz von der Empfangsvorrichtung (20) zu empfangen, wobei die Eingabedatensequenz auf dem drahtlosen Signal basiert, das von der Empfangsvorrichtung (30) empfangen wird;
eine Analysevorrichtung (15), die angepasst ist, die Ausgabedatensequenz mit der empfangenen Eingabedatensequenz zu vergleichen, wobei die Analysevorrichtung (15) angepasst ist, beim Vergleichen der Ausgabedatensequenz mit der empfangenen Eingabedatensequenz das vorbestimmte Testdatenmuster in der Ausgabedatensequenz und in der empfangenen Eingabe datensequenz zu überspringen.

2. Testeinrichtung nach Anspruch 1, wobei das empfangene Auslösesignal einen Frequenzsprung des drahtlosen Signals, das von der Übertragungsvorrichtung (20) emittiert wird, anzeigt.

3. Testeinrichtung nach Anspruch 2, wobei das empfangene Auslösesignal ein Frequenzsprungsignal eines Have-Quick(HQ)-Frequenzsprungsystems anzeigt.

4. Testeinrichtung nach einem der vorhergehenden Ansprüche, wobei eine Länge des vorbestimmten Testdatenmusters variabel ist.

5. Testeinrichtung nach einem der Ansprüche 1 bis 3, wobei das Testdatenmuster eine feste Datensequenz umfasst.

6. Testeinrichtung nach einem der vorhergehenden Ansprüche, wobei die Analysevorrichtung (15) angepasst ist, ein Fehlermaß der empfangenen Eingabedatensequenz mit Bezug auf die Ausgabedatensequenz zu berechnen.

7. Testeinrichtung nach Anspruch 6, wobei das Fehlermaß eine Bitfehlerrate umfasst.

8. Testeinrichtung nach einem der vorhergehenden Ansprüche, die ferner einen Speicher umfasst, der angepasst ist, die ausgegebene Testdatensequenz zu speichern,
wobei die Analysevorrichtung (15) angepasst ist, die gespeicherte Ausgabedatensequenz mit der empfangenen Eingabedatensequenz zu vergleichen.

9. Testanordnung (1), wobei die Testanordnung (1) Folgendes umfasst:
eine Übertragungsvorrichtung (20);
eine Empfangsvorrichtung (30);
eine Testeinrichtung (10) zum Testen einer drahtlosen Verbindung zwischen der Übertragungsvorrichtung (20) und der Empfangsvorrichtung (30) nach einem der Ansprüche 1 bis 8.

10. Testanordnung nach Anspruch 9,
wobei die Übertragungsvorrichtung (20) angepasst ist, die Ausgabedatensequenz von der Testeinrichtung (10) zu empfangen und auf Basis der Ausgabedatensequenz ein drahtloses Signal zu emittieren;
eine Empfangsvorrichtung (30), die angepasst ist, das drahtlose Signal, das von der Übertragungsvorrichtung (20) emittiert wird, zu empfangen und der Testeinrichtung (10) eine empfangene Datensequenz auf Basis des empfangenen drahtlosen Signals bereitzustellen;
wobei die Übertragungsvorrichtung (20) ferner angepasst ist, der Testeinrichtung (10) ein Auslösesignal bereitzustellen, wenn ein vorbestimmtes Ereignis eintritt.

11. Testanordnung nach einem der Ansprüche 9 oder 10, wobei die Übertragungsvorrichtung (20) angepasst ist, eine Frequenz des emittierten drahtlosen Signals zu ändern und der Testeinrichtung (10) das Auslösesignal bereitzustellen, wenn eine Frequenzänderung durchgeführt wird.

12. Testanordnung nach einem der Ansprüche 9 bis 11, wobei die Übertragungsvorrichtung (20) und die Empfangsvorrichtung (30) angepasst sind, einen Have-Quick(HQ)-Frequenzsprung anzuwenden.

13. Testverfahren zum Testen einer drahtlosen Verbindung zwischen einer Übertragungsvorrichtung (20) und einer Empfangsvorrichtung (30), wobei das Testverfahren Folgendes umfasst:
Erzeugen (S1) einer Testdatensequenz;
Empfangen (S2) eines Auslösesignals von der Übertragungsvorrichtung (20), wobei das Auslösesignal eine Änderung einer Übertragungseigenschaft der Übertragungsvorrichtung (20) anzeigt;
Einbinden (S3) eines vorbestimmten Testdatenmusters nach Empfangen des Auslösesignals von der Übertragungsvorrichtung (20) in die Testdatensequenz;
Bereitstellen (S4) der erzeugten Testdatensequenz, die das vorbestimmte Testdatenmuster beinhaltet, als eine Ausgabedatensequenz für die Übertragungsvorrichtung (20) zum Emittieren eines drahtlosen Signals auf Basis der Ausgabedatensequenz zur Empfangsvorrichtung (30), wobei das Testdatenmuster über den drahtlosen Kommunikationslink übertragen wird, während die Änderung der Übertragungseigenschaften angewendet wird;
Empfangen (S5) einer Eingabedatensequenz von der Empfangsvorrichtung (30), wobei die Eingabedatensequenz auf dem drahtlosen Signal basiert, das von der Empfangsvorrichtung (30) empfangen wird;
Vergleichen (S6) der Ausgabedatensequenz mit der empfangenen Eingabedatensequenz, wobei beim Vergleichen der Ausgabedatensequenz mit der empfangenen Eingabedatensequenz das vorbestimmte Testdatenmuster in der Ausgabedatensequenz und in der empfangenen Datensequenz übersprungen wird.

14. Testverfahren nach Anspruch 13, wobei das Vergleichen (S6) der Ausgabedatensequenz mit der Eingabedatensequenz ferner das Berechnen eines Fehlersmaßes umfasst, insbesondere das Berechnen einer Bitfehlerrate.

15. Testverfahren nach einem der Ansprüche 13 und 14, wobei das empfangene Auslösesignal einen Frequenzsprung des drahtlosen Signals, das von der Übertragungsvorrichtung (20) emittiert wird, anzeigt, insbesondere ein Frequenzsprungsignal eines HaveQuick(HQ)-Frequenzsprungsystems.

## Revendications

1. Appareil de test (10) pour tester une connexion sans fil entre un dispositif de transmission (20) et un dispositif de réception (30), l'appareil de test (10) comprenant :
un premier dispositif d'entrée (11) adapté pour recevoir un signal de déclenchement à partir du dispositif de transmission (20), le signal de déclenchement indiquant une modification d'une propriété de transmission du dispositif de transmission (20) ;
un générateur de signal de test (14) adapté pour générer une séquence de données de test,
dans lequel le générateur de signal de test (14) est adapté pour inclure un motif de données de test prédéterminé dans la séquence de données de test à la réception du signal de déclenchement à partir du dispositif de transmission (20), et
le générateur de signal de test (14) est adapté pour fournir la séquence de données de test générée comportant le motif de données de test prédéterminé sous forme de séquence de données de sortie ;
un premier dispositif de sortie (12) adapté pour fournir la séquence de données de sortie au dispositif de transmission (20) pour émettre un signal sans fil vers le dispositif de réception (30) sur la base de la séquence de données de sortie, dans lequel le motif de données de test prédéterminé est transmis à travers la liaison de communication sans fil tandis que la modification de la propriété de transmission est appliquée ;
un deuxième dispositif d'entrée (13) adapté pour recevoir une séquence de données d'entrée à partir du dispositif de réception (20), dans lequel la séquence de données d'entrée est basée sur le signal sans fil reçu par le dispositif de réception (30) ;
un dispositif d'analyse (15) adapté pour comparer la séquence de données de sortie avec la séquence de données d'entrée reçue,
dans lequel le dispositif d'analyse (15) est adapté pour ignorer le motif de données de test prédéterminé dans la séquence de données de sortie et dans la séquence de données d'entrée reçue lors de la comparaison de la séquence de données de sortie avec la séquence de données d'entrée reçue.

2. Appareil de test selon la revendication 1, dans lequel le signal de déclenchement reçu indique un saut de fréquence du signal sans fil émis par le dispositif de transmission (20).

3. Appareil de test selon la revendication 2, dans lequel le signal de déclenchement reçu indique un signal de saut de fréquence d'un système de saut de fréquence HAVEQUICK (HQ).

4. Appareil de test selon l'une quelconque des revendications précédentes, dans lequel une longueur du motif de données de test prédéterminé est variable.

5. Appareil de test selon l'une quelconque des revendications 1 à 3, dans lequel le motif de données de test comprend une séquence de données fixe.

6. Appareil de test selon l'une quelconque des revendications précédentes, dans lequel le dispositif d'analyse (15) est adapté pour calculer une mesure d'erreur de la séquence de données d'entrée reçue par rapport à la séquence de données de sortie.

7. Appareil de test selon la revendication 6, dans lequel la mesure d'erreur comprend un taux d'erreur sur les bits.

8. Appareil de test selon l'une quelconque des revendications précédentes, comprenant en outre une mémoire adaptée pour stocker la séquence de données de test de sortie,
dans lequel le dispositif d'analyse (15) est adapté pour comparer la séquence de données de sortie stockée avec la séquence de données d'entrée reçue.

9. Agencement de test (1), l'agencement de test (1) comprenant :
un dispositif de transmission (20) ;
un dispositif de réception (30) ;
un appareil de test (10) pour tester une connexion sans fil entre le dispositif de transmission (20) et le dispositif de réception (30) selon l'une quelconque des revendications 1 à 8.

10. Agencement de test selon la revendication 9, dans lequel
le dispositif de transmission (20) est adapté pour recevoir la séquence de données de sortie à partir de l'appareil de test (10) et pour émettre un signal sans fil sur la base de la séquence de données de sortie ;
un dispositif de réception (30) est adapté pour recevoir le signal sans fil émis par le dispositif de transmission (20) et pour fournir une séquence de données reçue sur la base du signal sans fil reçu à l'appareil de test (10) ;
dans lequel le dispositif de transmission (20) est en outre adapté pour fournir un signal de déclenchement à l'appareil de test (10) lorsqu'un événement prédéterminé se produit.

11. Agencement de test selon l'une quelconque des revendications 9 ou 10,
dans lequel le dispositif de transmission (20) est adapté pour modifier une fréquence du signal sans fil émis et pour fournir le signal de déclenchement à l'appareil de test (10) lorsqu'une modification de fréquence est réalisée.

12. Agencement de test selon l'une quelconque des revendications 9 à 11, dans lequel le dispositif de transmission (20) et le dispositif de réception (30) sont adaptés pour appliquer un saut de fréquence HAVEQUICK, HQ.

13. Procédé de test pour tester une connexion sans fil entre un dispositif de transmission (20) et un dispositif de réception (30), le procédé de test comprenant les étapes consistant à :
générer (S1) une séquence de données de test ;
recevoir (S2) un signal de déclenchement à partir du dispositif de transmission (20), le signal de déclenchement indiquant une modification d'une propriété de transmission du dispositif de transmission (20) ;
inclure (S3) un motif de données de test prédéterminé dans la séquence de données de test à la réception du signal de déclenchement à partir du dispositif de transmission (20) ;
fournir (S4) la séquence de données de test générée comportant le motif de données de test prédéterminé sous forme de séquence de données de sortie au dispositif de transmission (20), pour émettre un signal sans fil vers le dispositif de réception (30) sur la base de la séquence de données de sortie, dans lequel le motif de données de test est transmis à travers la liaison de communication sans fil tandis que la modification des propriétés de transmission est appliquée ;
recevoir (S5) une séquence de données d'entrée à partir du dispositif de réception (30), dans lequel la séquence de données d'entrée est basée sur le signal sans fil reçu par le dispositif de réception (30) ;
comparer (S6) la séquence de données de sortie avec la séquence de données d'entrée reçue, dans lequel les motifs de données de test prédéterminés dans la séquence de données de sortie et dans la séquence de données reçue sont ignorés lors de la comparaison de la séquence de données de sortie avec la séquence de données d'entrée reçue.

14. Procédé de test selon la revendication 13, dans lequel la comparaison (S6) de la séquence de données de sortie avec la séquence de données d'entrée comprend en outre le calcul d'une mesure d'erreur, en particulier le calcul d'un taux d'erreur sur les bits.

15. Procédé de test selon l'une quelconque des revendications 13 et 14, dans lequel le signal de déclenchement reçu indique un saut de fréquence du signal sans fil émis par le dispositif de transmission (20), en particulier un signal de saut de fréquence d'un système de saut de fréquence HAVEQUICK, HQ.
